# DEMANDE DE BREVET EUROPEEN

(11) **EP 0 615 926 A1**
(43) Date de publication de la demande: **21.09.1994**
(21) Numéro de dépôt: 94400556.0
(22) Date de dépôt: 15.03.1994
(51) Int. Cl.: B65G 1/137

(54) **Installation automatique de rangement d'objets dans des casiers et de distribution de ces objets**

(30) Priorité: 18.03.1993 FR 9303127; 07.12.1993 FR 9314641
(71) Demandeur: LIBRE SERVICE CONSIGNE Société Anonyme, F-93160 Noisy-Le-Grand (FR)
(72) Inventeur: Cazenave, Daniel, F-06370 Mouans-Sartoux (FR)
(74) Mandataire: Cournarie, Michèle

(57) **Abrégé**

Installation automatique de rangement d'objets portant une marque d'identification dans des casiers et de distribution de ces objets à la demande d'un utilisateur, caractérisée en ce qu'elle comprend
- un ensemble (3) de casiers portant chacun une marque d'identification, chaque casier étant destiné à ne recevoir qu'un seul objet, l'ensemble étant logé dans une enceinte (1) normalement close,
- au moins un poste d'accès (5, 6) par un utilisateur à ladite installation, ledit poste étant muni d'une interface de dialogue (9, 11) et d'un détecteur de marques d'identification,
- un moyen (R) mobile dans l'enceinte close et assurant le transfert des objets entre le poste d'accès (5, 6) et les casiers (3),
- un moyen de gestion (30) du déplacement dudit moyen de transfert (R), de l'identification des objets, de leur rangement dans un casier déterminé de l'ensemble de casiers, de l'identification du casier déterminé et de l'accès à ladite installation en fonction des informations fournies par les marques d' identification d'objets et de casiers et l'interface de dialogue.

## Description

L'invention concerne une installation automatique de rangement d'objets dans des casiers et de distribution de ces objets, à la demande d'un utilisateur notamment dans les domaines du courrier postal, des bagages, des coffres bancaires, des pièces détachées, etc.

Il est de plus en plus souhaité de mettre à la disposition du public des services automatiques de dépôt/conservation et de restitution d'objets divers, du type consignes automatiques. De tels besoins sont particulièrement ressentis dans le domaine postal, pour le traitement des objets non remis à leurs destinataires au cours de la tournée des préposés. Grâce à un avis d'instance laissé par le préposé, le destinataire est avisé de l'existence d'un objet à retirer à la poste. Sur présentation de l'avis d'instance à un guichetier et éventuellement justification de l'identité du destinataire, le guichetier va rechercher l'objet et le remet au destinataire. Si le rangement des lettres recommandées ne pose pas de gros problèmes, celui des paquets de formes, de dimensions, de consistances et de résistances extrêmement variables pose des problèmes évidents. Il serait plus rationnel de les classer selon ces critères mais alors comment les retrouver lorque l'on ne dispose que du nom du destinataire et de la date de mise en instance. Les armoires de stockage sont donc à l'heure actuelle le plus souvent rangées de manière anarchique et le repérage de l'objet recherché peut prendre un certain temps. En outre, le destinataire est tributaire des heures d'ouverture du guichet et ne peut parfois récupérer l'objet qui lui est destiné qu'au bout de quelques jours.

Pour résoudre de tels problèmes, il est fourni selon l'invention une installation automatique de rangement d'objets portant une marque d'identification dans des casiers et de distribution de ces objets à la demande d'un utilisateur, comprenant
- un ensemble de casiers portant chacun une marque d'identification, chaque casier étant destiné à ne recevoir qu'un seul objet, l'ensemble de casiers étant logé dans une enceinte normalement close,
- au moins un poste d'accès par un utilisateur à ladite installation, ledit poste étant muni d'une interface de dialogue et d'un détecteur de marques d'identification,
- un moyen mobile dans l'enceinte close et assurant le transfert d'objets entre le poste d'accès et les casiers,
- un moyen de gestion du déplacement dudit moyen de transfert, de l'identification des objets, de leur rangement dans un casier déterminé de l'ensemble de casiers, de l'identification du casier déterminé et de l'accès à ladite installation en fonction des informations fournies par les marques d'identification d'objets et de casiers d'une part et par l'interface de dialogue d'autre part.

Selon une variante particulièrement préférée, l'installation comporte un moyen de détermination des dimensions d'un objet introduit dans l'enceinte, l'ensemble de casiers comporte des casiers de différentes dimensions et le moyen de gestion choisit un casier de dimensions appropriées à partir des informations de dimensions fournies par ledit moyen de détermination des dimensions.

Dans certaines applications, notamment pour les consignes à bagages, les coffres bancaires, le stockage de pièces détachées, les utilisateurs en entrée et en sortie sont les mêmes et le poste d'accès peut être utilisé indifféremment en entrée ou en sortie. Dans ce cas, l'interface de dialogue permet l'identification en entrée de l'objet sur la base de la marque d'identification de l'objet et sa recherche en vue de son retour à l'utilisateur en réponse à une information fournie par l'utilisateur à l'interface du dialogue et corrélée à la marque d'identification de l'objet.

Dans d'autres applications, et en particulier dans les applications postales, les utilisateurs en entrée sont les préposés venant ranger les objets qui n'ont pas été distribués tandis que les utilisateurs en sortie sont les destinataires de ces objets. L'introduction et le rangement des objets en instance exigeant un certain temps, il est fortement souhaitable de prévoir au moins un poste d'accès en entrée et au moins un poste d'accès en sortie, l'interface de dialogue du poste d'accès en entrée permettant l'identification en entrée de l'objet sur la base de la marque d'identification de l'objet et l'interface de dialogue du poste d'accès en sortie permettant la recherche de l'objet en vue de son retour à l'utilisateur en réponse à une information fournie par l'utilisateur à l'interface de dialogue et corrélée à la marque d'identification de l'objet. De préférence et particulièrement en sortie, les interfaces de dialogue comprennent des moyens de contrôle de l'identité de l'utilisateur, notamment pour le retrait des objets recommandés. Elles peuvent également comporter des moyens de paiement pour le retrait d'objets envoyés contre remboursement.

Le moyen assurant le transfert des objets entre le ou les postes d'accès et l'ensemble de casiers est avantageusement un robot se déplaçant horizontalement et verticalement et en rotation sur lui-même entre deux armoires parallèles divisées en casiers. Pour éviter que lors du rangement d'objets mis en instance, le robot ne soit mobilisé par de nombreux allers et retours afin de déposer les objets dans les casiers libres de taille appropriée, il est de préférence prévu au moins un poste de chargement intermédiaire des objets entre le poste d'accès en entrée et l'ensemble de casiers. Lorsque le chargement sur le poste de chargement intermédiaire est terminé, le robot reçoit l'ordre de venir transférer les objets de ce poste intermédiaire vers les casiers disponibles de l'ensemble de casiers.

Selon un mode de réalisation préféré, le transfert de chaque objet du poste d'accès en entrée vers le casier de l'ensemble de casiers qui lui est attribué comprend
a) un mouvement rectiligne horizontal par lequel l'objet est amené en face de la colonne verticale à laquelle ledit casier appartient,
b) un mouvement rectiligne vertical par lequel l'objet est placé devant ledit casier,
c) une rotation par laquelle l'objet est présenté audit casier de face,
d) une introduction de l'objet dans ledit casier par poussée rectiligne,

les opérations a), b) et c) étant effectuées dans un ordre quelconque,
tandis que le transfert de chaque objet du casier de l'ensemble de casiers qui lui a été attribué vers le poste d'accès en sortie comprend
a) une extraction rectiligne de l'objet dudit casier,
b) une rotation par laquelle l'objet est présenté face au poste d'accès en sortie,
c) un mouvement rectiligne vertical par lequel l'objet est placé à la hauteur à laquelle sera effectuée l'opération d) suivante,
d) un mouvement rectiligne horizontal par lequel l'objet est amené devant le poste d'accès en sortie,

les opérations b), c) et d) étant effectuées dans un ordre quelconque.

Avantageusement, la totalité ou une partie de casiers de l'ensemble de casiers est amovible et constituée de palettes. Dans ce cas, le moyen assurant le transfert de chaque palette entre le ou les postes d'accès et l'emplacement attribué à la palette dans l'ensemble de casiers, comprend de préférence des moyens motorisés de préhension de la palette, destinés à tirer la palette provenant de son emplacement dans l'ensemble de casiers, ou du poste d'accès en entrée, pour la placer sur un plateau de transfert, ou à pousser la palette posée sur un plateau de transfert dans son emplacement dans l'ensemble de casiers ou vers le poste d'accès en sortie, et des moyens de déplacement en translations horizontale et verticale de l'ensemble formé par le plateau de transfert, la palette et ses moyens motorisés de préhension, ces moyens de déplacement étant destinés à effectuer le transfert de la palette lorsqu'elle est placée sur le plateau de transfert.

Selon un mode de réalisation particulièrement intéressant, les moyens motorisés de préhension de la palette consistent en une fourche motorisée en rotation, et en un système de chariots croisés auquel la fourche est solidarisée par son axe de rotation, permettant de déplacer la palette en toutes positions sur le plateau de transfert, jusqu'à l'extérieur et au bord du plateau de transfert.

L'utilisation de l'installation automatique selon la présente invention va maintenant être décrite succintement en se référant à une utilisation par la poste.

Les préposés effectuant la distribution des objets (lettres simples, lettres recommandées, paquets simples ou recommandés, paquets contre remboursement, ... ) sont munis d'étiquettes doubles, de préférence autocollantes, comportant un numéro aléatoire sous forme numérique et sous forme de code à barres. Certains des objets qu'ils distribuent ne peuvent être remis à leur destinataire que s'il est présent personnellement (envoi recommandé) ou lorsqu'ils ne peuvent pas être laissés simplement dans la boîte aux lettres (paquets volumineux, objets contre remboursement).

En cas d'absence du destinataire, le préposé dépose un avis d'instance sur lequel il a préalablement collé la moitié d'une étiquette portant le numéro aléatoire sous forme numérique, et éventuellement sous forme de code à barres, et colle l'autre moitié portant le numéro sous forme de code à barres sur l'objet à mettre en instance.

De retour au bureau de poste, le préposé procède à la mise en instance des objets de la manière suivante :
grâce à l'interface de dialogue, qui peut être ici constituée par un simple crayon optique, l'identification de l'objet est transmise au moyen de gestion par lecture du code à barres apposé sur l'objet. L'objet est alors inséré dans le poste de chargement intermédiaire, dans une case correspondant à sa dimension. Cette case est équipée d'une marque d'identification, constituée également par un code à barres dont les coordonnées sont transmises au moyen de gestion à l'aide de l'interface de dialogue.

Le préposé procède ainsi jusqu'à épuisement des objets qu'il a à mettre en instance. La mise en place dans les cases du poste de chargement intermédiaire se fait automatiquement ou manuellement. En fin de chargement, le préposé à l'aide du crayon optique lit un code à barres apposé sur le poste d'accès qui indique au moyen de gestion que le chargement est terminé; le moyen de gestion donnera alors l'ordre au robot de commencer le chargement des casiers à partir du poste de chargement intermédiaire.

Lors de la mise en place des objets dans les casiers de stockage définitif, sont transmises au moyen de gestion, par lecture de code à barres apposé sur les casiers, l'identification du casier dans lequel un objet déterminé a été déposé ainsi que les instructions de programmation du robot pour atteindre ce casier en vue du retrait ultérieur de l'objet.

Lorsque le destinataire trouve son avis d'instance dans sa boîte aux lettres, il se présente au poste d'accès en sortie qui est équipé d'un écran par exemple tactile, sur lequel apparaissent les instructions de retrait de l'objet. L'interface de dialogue lui permet d'introduire le code apposé sur l'avis d'instance, soit sous forme numérique par l'intermédiaire d'un clavier, soit par lecture du code à barres à l'aide d'un crayon optique intégré à l'interface de dialogue. Le moyen de gestion identifie alors l'objet à délivrer et donne au robot les instructions nécessaires pour aller le rechercher et l'amener à l'ouverture de sortie de l'installation, qui se présente généralement sous forme d'un sas. De façon particulièrement avantageuse, la porte coulissante extérieure du sas est équipée d'un moteur avec limiteur de couple, assurant l'inversion du sens du mouvement de la porte.

Si l'objet en instance est un objet recommandé, le moyen de gestion n'autorise l'ouverture du sas que lorsque l'identité du destinataire a été vérifiée, par exemple par introduction d'un code confidentiel dans l'interface de dialogue.

Si l'objet est envoyé contre remboursement, le moyen de gestion n'autorise l'ouverture du sas que lorsque le client a acquitté le montant requis par utilisation d'une carte de paiement.

D'autres caractéristiques et avantages de l'invention apparaîtront à la lecture de la description détaillée suivante, faite en référence aux dessins annexés dans lesquels :
la figure 1 est une vue schématique de dessus d'une installation selon la présente invention,
la figure 2 est une vue du côté chargement d'un mode de réalisation particulier de l'installation automatique
la figure 3 est un schéma synoptique de l'installation, et
la figure 4 est une vue schématique de dessus représentant les positions d'une palette par rapport à son plateau de transfert, au cours du transfert de la palette.

Il va maintenant être décrit un mode de réalisation particulier de l'invention particulièrement adapté à la mise en instance d'objets postaux.

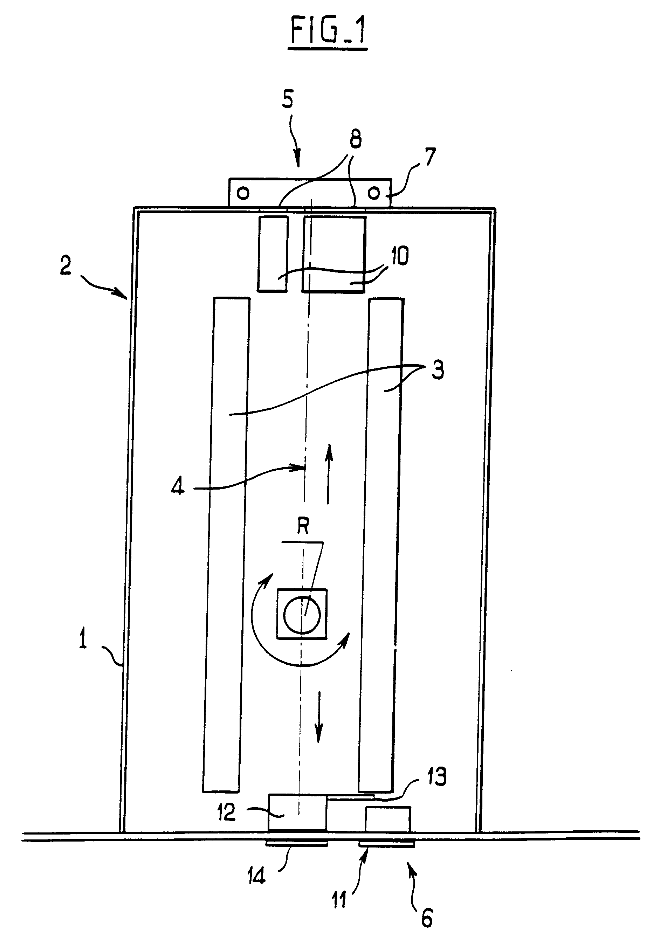

Une enceinte 1 comporte une ou deux portes d'accès 2 pour la maintenance des dispositifs qu'elle renferme. Il y est contenu, par exemple, deux armoires 3, constituant l'ensemble de casiers, disposées parallèlement le long d'un axe longitudinal 4. Les armoires sont constituées par un ensemble de montants portant des glissières sur lesquelles sont placés des plateaux (non représentés) permettant de moduler le nombre et la dimension des casiers. A une extrémité de l'ensemble des casiers, est prévu un poste d'accès pouvant agir en entrée ou en sortie, mais sur l'exemple représenté sur la figure 1, il est prévu un poste d'accès en entrée 5 et un poste d'accès en sortie 6. Le poste d'accès en entrée 5 n'est accessible que pour des personnes autorisées, préposés, guichetiers, tout personnel de la poste éventuellement.... Par contre le poste d'accès en sortie est accessible au public soit à l'intérieur de la poste, soit en extérieur.

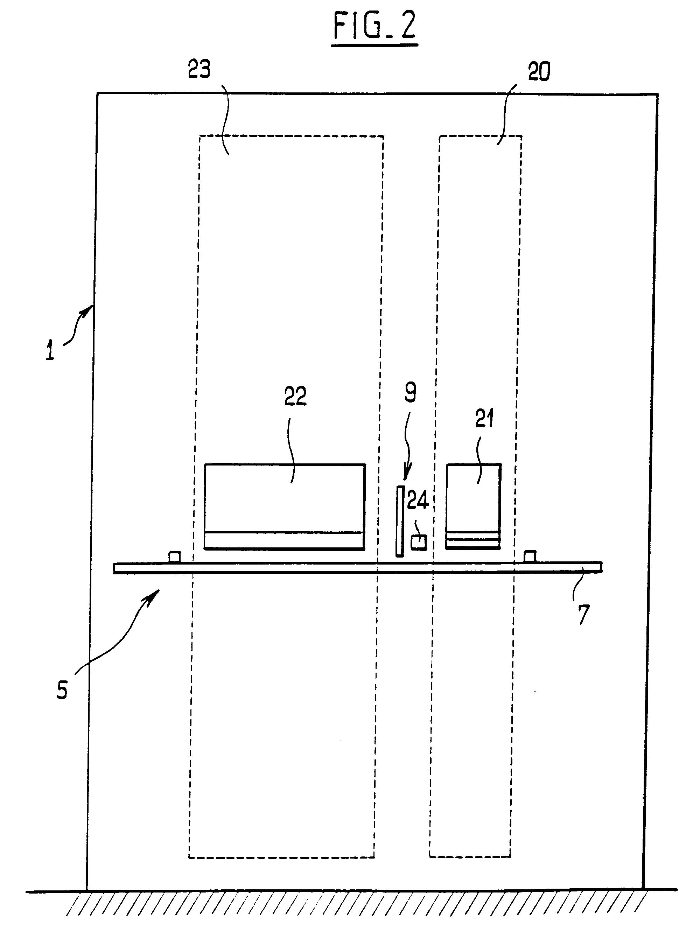

A titre d'exemple, on va décrire le cas où le flux de chargement d'objets est important et nécessite l'utilisation d'un poste de chargement intermédiaire afin de ne pas mobiliser le robot et la personne effectuant le chargement pendant des temps importants. Il est prévu au moins un poste de chargement intermédiaire et de préférence deux postes de chargement, l'un destiné aux petits objets et comportant de ce fait des casiers de tailles réduites et l'autre destiné aux gros objets et comportant des casiers de dimensions importantes. Lorsque le préposé revient de sa tournée avec un nombre d'objets en instance, il se présente au poste d'accès 5 et dispose d'une tablette ou d'une table 7 disposée devant une ou deux fenêtres 8 (figure 2) sur lesquelles il pose les objets à introduire dans l'enceinte 1. A l'aide d'une interface de dialogue 9, par exemple constituée d'un crayon optique, il communique à un moyen de gestion la marque d'identification de l'objet à mettre en instance et introduit l'objet par une fenêtre 8 dans l'un des postes de chargement 10, selon la taille de l'objet et la taille de la fenêtre.

Ces postes de chargement sont par exemple du type à plateaux amovibles, montés sur un axe rotatif et mobile en hauteur permettant de localiser un emplacement vide correspondant aux dimensions de l'objet à introduire. Après identification de l'objet à introduire en raison de la marque d'identification qu'il comporte, l'interface de dialogue enregistre le passage de l'objet dans le poste de chargement intermédiaire et transmet au moyen de gestion l'identification du plateau dans lequel il a été posé. Le préposé procède ainsi jusqu'à épuisement des objets qu'il a ramenés de sa tournée. Il procède alors à la lecture d'un code à barres spécifique apposé sur le poste d'accès pour indiquer que le chargement sur les postes de chargement intermédiaires est terminé et que le robot R de chargement dans l'ensemble 3 de casiers peut intervenir lorsqu'il n'a pas d'objets à distribuer vers le poste d'accès en sortie.

Lorsque le robot est disponible, il vient prélever les objets dans le poste ou les postes de chargement intermédiaires en lisant les coordonnées du plateau du poste de chargement intermédiaire qu'il transmet au moyen de gestion et en fonction des informations fournies par le poste de gestion, va disposer les objets un par un dans les casiers disponibles de l'ensemble 3 de casiers. Il indique alors au moyen de gestion l'emplacement du casier définitif et l'identification de l'objet qu'il y a déposé.

Le moyen de gestion connaît alors l'emplacement d'un objet déterminé, grâce à la marque d'identification de l'objet (par exemple code à barres) et l'emplacement du casier dans lequel il se trouve (identification du casier) et informations nécessaires à communiquer au robot pour qu'il retrouve le casier et y prélève l'objet.

Dans le cas de flux de chargement peu importants, on prévoit que le préposé introduise directement les objets dans des casiers des armoires à proximité du poste d'accès en entrée.

Le poste d'accès en sortie comporte une interface de dialogue 11 et une ouverture dans l'enceinte, de préférence sous forme d'un sas 12 réalisé entre une porte coulissante 13 à l'intérieur de l'enceinte et une porte coulissante 14 à l'extérieur de l'enceinte. Lorsque le destinataire d'un objet se présente au poste d'accès 6 muni de son avis d'instance portant une marque d'identification corrélée à la marque d'identification portée par l'objet en instance, il introduit dans l'interface de dialogue, qui peut prendre diverses formes, le code porté par son avis d'instance. Il peut par exemple introduire sur un clavier numérique le code numérique porté par son avis d'instance ou saisir, à l'aide d'un crayon optique, le code à barres que peut également porter cet avis d'instance. Le moyen de gestion sait alors quel objet doit être retiré et communique les informations nécessaires au robot pour que celui-ci aille rechercher l'objet dans l'ensemble de casiers et le ramène devant la porte coulissante 13. Le moyen de gestion commande alors l'ouverture de la porte coulissante 13 puis celui de la porte coulissante 14.

Dans le cas particulier d'un objet recommandé, il est nécessaire d'identifier personnellement le destinataire et pas seulement par lecture de l'avis d'instance qui pourrait être détenu par quiconque ayant accès à la boîte aux lettres du destinataire. De ce fait, le destinataire peut disposer d'une carte spéciale, délivrée par exemple contre abonnement, qu'il introduit dans un lecteur approprié de l'interface de dialogue et introduit ensuite un code confidentiel dans l'interface de dialogue. Si le code est correct, le robot commande alors l'ouverture de la porte coulissante 14. Une étape supplémentaire peut être prévue lorsque l'objet recommandé est en outre avec avis de réception, le destinataire ne pouvant par exemple récupérer sa carte confidentielle qu'après signature et remise de l'imprimé correspondant.

Dans le cas d'un objet à retirer contre remboursement, l'interface de dialogue comporte un lecteur de carte de paiement que le destinataire doit introduire afin d'autoriser le débit du montant correspondant.

Bien entendu diverses variantes peuvent être envisagées, et on décrira succintement le cas où le retrait des objets n'est pas effectué directement par le destinataire, mais par l'intermédaire d'un guichetier qui dispose d'un poste d'accès similaire à celui du préposé pour récupérer l'objet dans l'ensemble de casiers, par lecture du code de l'avis d'instance que lui a remis le destinataire. Dans ce cas, le poste d'accès du guichetier ne dispose pas forcément d'un sas et les opérations d'identification du destinataire, de signature éventuelle d'un avis de réception, de paiement d'une somme déterminée,..., sont effectuées de manière classique par l'intermédiaire du guichetier. Ceci est particulièrement intéressant pour les destinataires n'ayant pas jugé utile de prendre un abonnement ou de se procurer une carte d'identification.

La figure 2 représente une vue schématique du côté chargement dans le cas particulier d'une installation postale. Il est particulièrement indiqué de disposer de deux postes de chargement intermédiaires, l'un destiné aux objets de petites dimensions, lettres et plis, éventuellement catalogues par exemple de vente par correspondance, et l'autre particulièrement destiné aux objets de grandes dimensions. Un poste de chargement 20 pour petits objets comporte des casiers de largeur normalisée à la taille des objets normalement acceptés par le service postal et d'une hauteur, par exemple 20 mm, permettant de les manipuler facilement. Une fenêtre 21 placée au-dessus de la table de la tablette 7 permet l'introduction des objets par le préposé dans le poste de chargement 20.

De même une fenêtre 22 permet l'introduction par le préposé des objets de grandes dimensions dans un poste de chargement 23 dont les casiers ont des dimensions plus importantes. Les dimensions des casiers peuvent par ailleurs être modulées par enlèvement de plateaux intermédiaires de façon à constituer des casiers de diverses tailles.

Pour des raisons de sécurité, chaque fenêtre 21, 22 est équipée d'un détecteur de passage de l'objet qui, après identification de l'objet par l'interface de dialogue 9, s'assure de l'introduction de l'objet dans le poste de chargement intermédiaire et le signale au moyen de gestion. Une fois que tous les objets ont été introduits dans les postes de chargement intermédiaires, le préposé transmet, par exemple par l'interface de dialogue 9, ici un crayon optique, une information de fin de la procédure, par exemple par lecture d'un code à barres 24 apposé sur le poste d'accès en entrée. Le moyen de gestion peut alors envoyer au robot des ordres de déchargement des postes de chargement intermédiaires et d'introduction des objets dans l'ensemble de casiers 3.

Il est bien entendu que l'application postale décrite ci-dessus n'est donnée qu'à titre illustratif et que d'autres applications sont particulièrement intéressantes. On va décrire brièvement une application à des coffres bancaires.

Bien qu'à priori il soit concevable de stocker dans un même casier plusieurs objets appartenant à un même titulaire comme cela se fait dans les coffres bancaires classiques, le présent système permet d'attribuer plusieurs casiers à un même titulaire en fonction de la taille des objets, afin de ne lui amener que l'objet qu'il désire retirer et non pas la totalité des objets parmi lesquels il doit choisir celui qu'il désire spécifiquement retirer à un instant donné. Dans un tel cas, il suffit d'un poste d'accès unique permettant le chargement par le titulaire lui-même et le retrait par ce même titulaire. L'interface de dialogue comporte alors obligatoirement un lecteur de carte magnétique ou de tout autre dispositif similaire permettant l'introduction d'une information d'identification de l'utilisateur. Pour l'introduction d'un objet dans l'enceinte 1, l'utilisateur procède comme il a été décrit précédemment pour un préposé et, quelque temps après, lorsqu'il désire récupérer l'objet qu'il a placé en dépôt, il utilise le poste d'accès comme il a été décrit précédemment pour le destinataire d'un pli en instance.

Bien entendu ceci s'applique également dans le cas de consignes automatiques pour bagages.

Bien qu'habituellement le stockage des pièces détachées n'impose pas l'existence d'un casier par pièce, puisqu'un même casier peut contenir des pièces identiques, il n'est pas impossible d'envisager le stockage de pièces détachées plus ou moins personnalisées imposant l'utilisation d'une adresse unique par objet; en outre, le fait que l'ensemble de casiers soit constitué par des montants à glissières et à plateaux, permet de moduler la dimension des casiers et ainsi d'adapter le nombre des casiers de grandes tailles et le nombre des casiers de petites tailles aux nombres correspondants des pièces détachées de petites tailles et de grandes tailles. Ceci peut être également intéressant dans le cas où il est nécessaire de disposer de plusieurs pièces détachées pour une même destination finale, et de les regrouper momentanément dans un même casier.

Bien que divers types de robots de dépôt et de récupération des objets dans l'ensemble de casiers soient envisageables, on donnera à titre d'exemple la réalisation suivante.

Le robot est constitué par un plateau inférieur monté sur paliers à billes et guidé par des rails de longueurs variables et définies selon le site d'installation et la dimension des armoires constituant l'ensemble de casiers. Les rails de guidages sont fixés sur un châssis monté sur le sol.

Le déplacement longitudinal le long de l'axe 4 s'effectue grâce à un moteur et un codeur incrémental, la transmission s'effectuant elle aussi par une courroie crantée.

Une structure verticale fixée sur le plateau inférieur permet le déplacement d'un deuxième plateau sur une hauteur déterminée en fonction de la hauteur des armoires constituant l'ensemble des casiers, grâce à une motorisation du type de celle précédente. Le plateau supérieur du robot peut également se déplacer selon un axe perpendiculaire à l'axe 4, afin d'atteindre les plateaux correspondants de l'ensemble de casiers. Les deux plateaux du robot sont munis de pinces articulées qui saisissent les plateaux de l'ensemble de casiers, en fonction des indications fournies par le moyen de gestion.

Dans le cas où il serait nécessaire de disposer d'un volume de stockage important, on pourrait disposer deux ou plusieurs ensembles de casiers en parallèle avec un robot entre deux armoires constituant chaque ensemble de casiers, ou bien il serait également envisageable de prévoir des travées transversales avec déplacement du robot selon un axe perpendiculaire à l'axe 4.

En-tête du robot sont montées les connexions de commande reliant le robot au moyen de gestion ainsi que l'alimentation assurée par des câbles guidés par une chaîne porte-câbles. La tête est mobile en rotation sur 380°C et comporte des moyens de lecture des codes à barres identifiant les plateaux, ce qui permet au robot de se repérer et de se positionner par rapport au casier recherché.

Un élément particulièrement intéressant dans une variante selon l'invention est l'existence d'un dispositif de détermination des dimensions de l'objet à stocker, permettant, à partir du poste de chargement intermédiaire qui peut ne comporter qu'un nombre réduit de dimensions de casiers, de sélectionner parmi un plus grand nombre de dimensions de casiers celle qui correspond le mieux à l'objet à stocker, en assurant ainsi un garnissage méthodique et optimal de l'ensemble de casiers. Un tel dispositif est essentiellement, dans le cas d'armoires dont les plateaux ont nécessairement une taille prédéterminée, constitué par un dispositif à opto-coupleurs montés sur deux colonnes entre lesquelles se déplace l'objet, ce qui permet d'effectuer la mesure de sa hauteur. L'information est alors transmise au moyen de gestion qui dirige l'objet vers un casier de hauteur correspondante disponible dans l'ensemble de casiers.

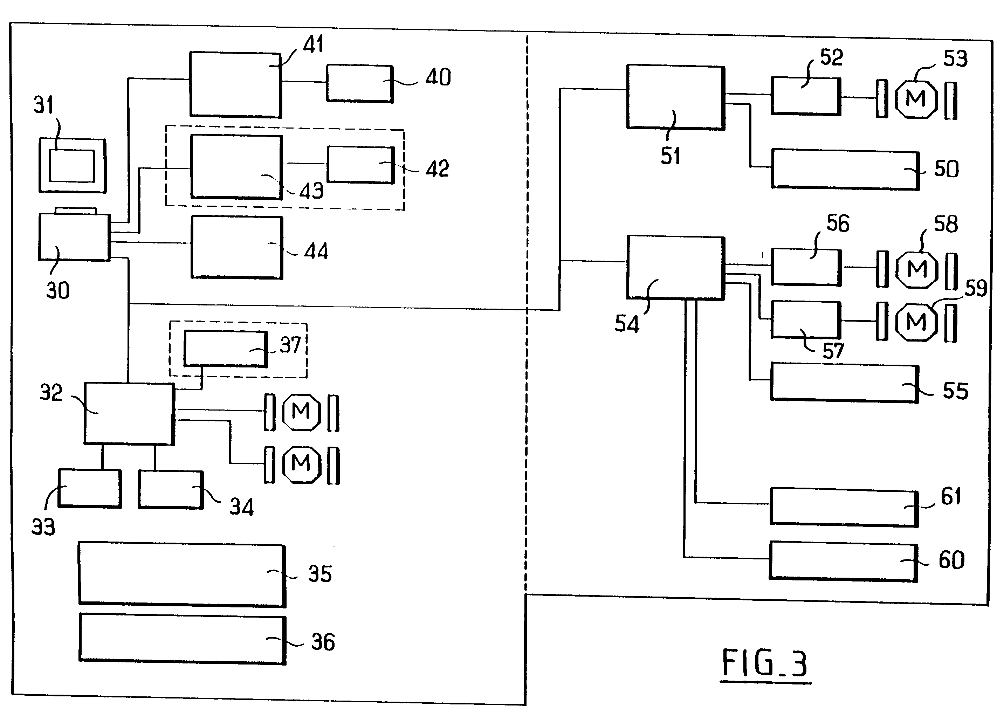

La figure 3 est un tableau synoptique des liaisons opérationnelles entre les postes d'accès en entrée et en sortie et le robot de transfert logé dans l'ensemble de casiers.

Le cadre situé à gauche de la figure 3 regroupe les diverses fonctions de gestion ainsi que le fonctionnement des postes d'accès, tandis que le cadre situé à droite regroupe les fonctions du robot.

Le moyen de gestion décrit précédemment est avantageusement constitué par un microordinateur 30 comportant un écran de contrôle 31. A ce microordinateur 30 est relié un moyen de gestion 32 du fonctionnement des postes de chargement intermédiaires 33 et 34 et des moteurs M d'ouverture des fenêtres d'accès aux postes de chargement intermédiaires et au sas de sortie vers le destinataire. Des sources d'alimentation 35, ainsi qu'un système de sécurité 36 du type onduleur, sont prévus pour alimenter en énergie tous les composants du système. Le poste d'accès en sortie représenté schématiquement dans la partie supérieure de la partie gauche de la figure 3 comprend un clavier alphanumérique 40 qui transmet, par l'intermédiaire d'un lecteur encodeur 41, la marque d'identification de l'objet à retirer a l'ordinateur de gestion 30. Ce clavier 40 et le lecteur associé 41 peuvent être accompagnés ou remplacés par un crayon optique 42 et un lecteur approprié 43 qui transmettent la marque d'identification à l'ordinateur de gestion 30. Un écran tactile 44 fournit les instructions nécessaires à l'utilisateur.

L'ordinateur de gestion 30 et le moyen de gestion 32 des postes de chargement intermédiaires sont reliés opérationnellement à un robot dont la gestion est assurée par les éléments décrits ci-dessous.

Le robot est équipé d'un émetteur/récepteur infrarouge 50 (constituant une balise de déplacement le long d'un axe) relié à un microprocesseur 51 lui-même connecté à un microprocesseur 52 de gestion d'un moteur 53. Le fonctionnement de ce moteur permet le déplacement du robot le long de l'axe longitudinal 4 situé entre les deux armoires constituant l'ensemble 3 de casiers et la balise permet le repérage de l'emplacement du robot sur cet axe, et son arrêt lorsqu'il arrive en bout de course de part et d'autre de l'ensemble de casiers.

Un deuxième microprocesseur 54 relié à un émetteur/récepteur infrarouge 55 et, par l'intermédiaire de deux autres microprocesseurs 56 et 57 à des moteurs 58 et 59 respectivement. L'un des moteurs 58, 59 assure le déplacement vertical du plateau supérieur du robot tandis que l'autre assure le déplacement en profondeur de ce plateau à la hauteur recherchée. L'émetteur/récepteur 55 sert alors à limiter le déplacement en profondeur du plateau (cet émetteur/récepteur servant alors de balise perpendiculairement à l'axe longitudinal 4).

En fonction des informations reçues de l'ordinateur de gestion 30, le microprocesseur 54 actionne un vérin 60 permettant de faire monter ou descendre le robot, les organes 61 de préhension des plateaux, qui peuvent être des pinces articulées ou des ventouses magnétiques.

On notera également la présence d'un élément 37, entouré d'un cadre en pointillé, et relié opérationnellement au moyen de gestion 32 des postes de chargement intermédiaires 33 et 34. Cet organe 37 est particulièrement intéressant lorsque les objets à stocker ont des dimensions extrêmement variables, car il symbolise un système d'opto-coupleurs montés sur deux colonnes entre lesquelles se déplace l'objet pour en effectuer la mesure de la hauteur afin d'aller placer l'objet dans un casier de taille correspondante. Ceci est particulièrement intéressant pour un rangement rationnel et le moins encombrant possible des objets.

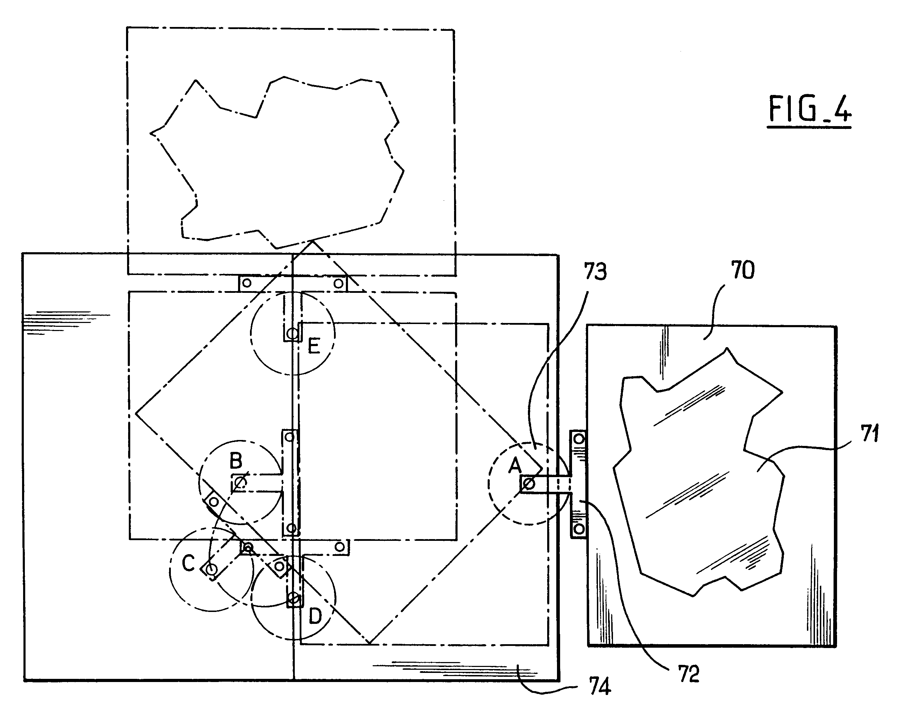

La figure 4 représente schématiquement, en vue partielle de dessus, une variante de l'installation dans laquelle un ou plusieurs casiers de l'ensemble de casiers 3 sont amovibles et constitués d'une ou plusieurs palettes 70.

Pour transférer une palette 70 et son chargement 71 d'une position A, dans laquelle elle est stockée dans l'emplacement qui lui a été attribué dans l'ensemble de casiers 3, à une position E dans laquelle elle est placée dans le sas non représenté du poste d'accès en sortie 6, on saisit la palette 70 au moyen d'une fourche de préhension 72. Cette fourche 72 est équipée d'un moteur pour rotation situé en 73. Le moteur en 73 est monté sur des chariots croisés non représentés qui permettent de déplacer l'axe de rotation de la fourche 72 en tous points d'un plateau de transfert 74.

Le schéma ne représente que les mouvements relatifs de la fourche 72 et de la palette 70 par rapport au plateau de transfert 74, au cours du transfert de la palette 70.

Dans un premier temps, la palette est dégagée de son emplacement dans l'ensemhle de casiers 3 par traction rectiligne de la position A à la position B. Par l'action de différents moteurs, la fourche 72 et la palette 70 sont ensuite successivement placées en positions C et D, selon des mouvements combinés de rotation et de translation. En phase terminale du transfert, on effectue au moyen de la fourche 72 le déchargement de la palette 70 vers le sas de sortie, selon un mouvement de poussée rectiligne, ce déchargement étant représenté par la position E.

A tout moment de la phase de transfert dans laquelle la palette 70 est posée sur le plateau de transfert 74, l'ensemble constitué de la fourche 72, de la palette 70, de son chargement 71 et du plateau de transfert 74 est susceptible d'être déplacé en translations horizontale et/ou verticale, afin de l'amener devant le sas du poste d'accès en sortie 6.

Dans le cas d'un transfert de la palette du poste d'accès en entrée 5 vers son emplacement dans l'ensemble de casiers 3, les positions précédentes sont décrites dans l'ordre inverse.

Le transfert de la palette 70 d'un emplacement dans un ensemble de casiers 3 à un autre emplacement du même ensemble 3 ou d'un autre, est également envisageable.

Il est entendu que l'invention telle que décrite précédemment n'est pas limitée aux seuls modes de réalisation et aux seules variantes décrites et que diverses modifications, notamment quant à la structure des divers éléments, peuvent être apportées tout en restant dans la portée de la présente invention.

## Revendications

**1.-** Installation automatique de rangement d'objets portant une marque d'identification dans des casiers et de distribution de ces objets à la demande d'un utilisateur, caractérisée en ce qu'elle comprend
- un ensemble (3) de casiers portant chacun une marque d'identification, chaque casier étant destiné à ne recevoir qu'un seul objet, l'ensemble étant logé dans une enceinte (1) normalement close,
- au moins un poste d'accès (5, 6) par un utilisateur à ladite installation, ledit poste étant muni d'une interface de dialogue (9, 11) et d'un détecteur de marques d'identification,
- un moyen (R) mobile dans l'enceinte close et assurant le transfert des objets entre le poste d'accès (5, 6) et les casiers (3),
- un moyen de gestion (30) du déplacement dudit moyen de transfert (R), de l'identification des objets, de leur rangement dans un casier déterminé de l'ensemble de casiers, de l'identification du casier déterminé et de l'accès à ladite installation en fonction des informations fournies par les marques d'identification d'objets et de casiers et l'interface de dialogue.

**2.-** Installation automatique selon la revendication 1, caractérisée en ce qu'elle comprend en outre un moyen de détermination (37) des dimensions d'un objet introduit dans l'enceinte, l'ensemble de casiers (3) comportant des casiers de différentes dimensions et le moyen de gestion choisissant en fonction des informations de dimensions fournies par ledit moyen (37) un casier de dimensions appropriées.

**3.-** Installation selon la revendication 1 ou 2, caractérisée en ce qu'elle comporte un seul poste d'accès (5, 6) assurant l'entrée des objets dans l'enceinte et leur sortie, l'interface de dialogue (9, 11) permettant l'identification en entrée de l'objet sur la base de la marque d'identification de l'objet et sa recherche en vue de son retour à l'utilisateur en réponse à une information fournie par l'utilisateur à l'interface de dialogue et corrélée à la marque d'identification de l'objet.

**4.-** Installation selon la revendication 1 ou 2, caractérisée en ce qu'elle comprend
- un poste d'accès (5) assurant l'entrée des objets dans l'enceinte (1), l'interface de dialogue (9) permettant l'identification en entrée de l'objet sur la base de la marque d'identification de l'objet, et
- un poste d'accès (6) assurant la sortie des objets, l'interface de dialogue (11) permettant la recherche de l'objet en vue de son retour à l'utilisateur en réponse à une information fournie par l'utilisateur à l'interface de dialogue et corrélée à la marque d'identification de l'objet.

**5.-** Installation selon l'une quelconque des revendications 1 à 4, caractérisée en ce que la ou les interfaces de dialogue comportent des moyens de contrôle de l'identité de l'utilisateur.

**6.-** Installation selon l'une quelconque des revendications 1 à 5, caractérisée en ce que chaque poste d'accès comporte au moins une ouverture (8, 12, 14) obturable dans l'enceinte (1).

**7.-** Installation selon l'une quelconque des revendications 1 à 6, caractérisée en ce que le moyen assurant le transfert des objets entre le ou les postes d'accès (5, 6) et l'ensemble de casiers (3) est un robot (R) se déplaçant horizontalement et verticalement et en rotation sur lui-même.

**8.-** Installation selon l'une quelconque des revendications 1 à 7, caractérisée en ce qu'elle comprend en outre au moins un poste de chargement intermédiaire (10) des objets entre le poste d'accès en entrée (5) et l'ensemble de casiers (3).

**9.-** Installation selon la revendication 8, caractérisée en ce qu'elle comprend deux postes de chargement intermédiaires (20, 23) pour objets de tailles différentes associés à deux ouvertures obturables (21, 22) de tailles correspondantes.

**10.-** Installation selon l'une quelconque des revendications 1 à 9, caractérisée en ce que le poste d'accès en sortie (6) est équipé de deux interfaces de dialogue, l'une (40, 41) permettant l'introduction d'une marque d'identification sous forme numérique et l'autre (42, 43) permettant l'introduction d'une marque d'identification sous forme de code à barres.

**11.-** Installation selon l'une quelconque des revendications 1 à 10, caractérisée en ce que le transfert de chaque objet du poste d'accès en entrée (5) vers le casier de l'ensemble de casiers (3) qui lui est attribué comprend
a) un mouvement rectiligne horizontal par lequel l'objet est amené en face de la colonne verticale à laquelle ledit casier appartient,
b) un mouvement rectiligne vertical par lequel l'objet est placé devant ledit casier,
c) une rotation par laquelle l'objet est présenté audit casier de face,
d) une introduction de l'objet dans ledit casier par poussée rectiligne,
les opérations a), b) et c) étant effectuées dans un ordre quelconque.

**12.-** Installation selon l'une quelconque des revendications 1 à 11, caractérisée en ce que le transfert de chaque objet du casier de l'ensemble de casiers (3) qui lui a été attribué vers le poste d'accès en sortie (6) comprend
a) une extraction rectiligne de l'objet dudit casier,
b) une rotation par laquelle l'objet est présenté face au poste d'accès en sortie (6),
c) un mouvement rectiligne vertical par lequel l'objet est placé à la hauteur à laquelle sera effectuée l'opération d) suivante,
d) un mouvement rectiligne horizontal par lequel l'objet est amené devant le poste d'accès en sortie (6),
les opérations b), c) et d) étant effectuées dans un ordre quelconque.

**13.-** Installation selon l'une quelconque des revendications 1 à 12, caractérisée en ce que la totalité ou une partie des casiers de l'ensemble de casiers (3) est amovible et constituée de palettes.

**14.-** Installation selon la revendication 13, caractérisée en ce que le moyen assurant le transfert de chaque palette entre le ou les postes d'accès (5, 6) et l'emplacement attribué à la palette dans l'ensemble de casiers (3), comprend des moyens motorisés de préhension de la palette, destinés à tirer la palette provenant de son emplacement dans l'ensemble de casiers (3), ou du poste d'accès en entrée (5), pour la placer sur un plateau de transfert, ou à pousser la palette posée sur un plateau de transfert dans son emplacement dans l'ensemble de casiers (3) ou vers le poste d'accès en sortie (6), et des moyens de déplacement en translations horizontale et verticale de l'ensemble formé par le plateau de transfert, la palette et ses moyens motorisés de préhension, ces moyens de déplacement étant destinés à effectuer le transfert de la palette lorsqu'elle est placée sur le plateau de transfert.

**15.-** Installation selon la revendication 14, caractérisée en ce que les moyens motorisés de préhension de la palette consistent en une fourche motorisée en rotation, et en un système de chariots croisés auquel la fourche est solidarisée par son axe de rotation, permettant de déplacer la palette en toutes positions sur le plateau de transfert, jusqu'à l'extérieur et au bord du plateau de transfert.
